# EUROPEAN PATENT SPECIFICATION

(11) **EP 1 942 778 B1**
(45) Date of publication and mention of the grant of the patent: **09.12.2009**
(21) Application number: 06810011.4
(22) Date of filing: 09.10.2006
(51) Int. Cl.: A47J 27/09

(54) **BAKING OR HEATING POT PROVIDED WITH ADJUSTABLE DEVICE FOR INNER VAPOURS BREATHING**
MIT EINER VERSTELLBAREN VORRICHTUNG ZUM BRÜDENABZUG VERSEHENER TOPF ZUM BACKEN UND ERHITZEN
RECIPIENT DE CUISSON ET DE CHAUFFAGE DOTE D'UN DISPOSITIF REGLABLE D'AERATION DES VAPEURS INTERNES

(30) Priority: 10.10.2005 IT CZ20050013
(43) Date of publication of application: 16.07.2008
(73) Proprietor: Develpack S.r.l., 89053 Reggio Calabria (IT)
(72) Inventor: PALAMARA, Antonio, I-89053 Catona (IT); COTRONEI, Mariantonia, I-89053 Salice Calabro (IT)
(86) International application number: PCT/IT2006/000716
(87) International publication number: WO 2007/043086

(56) References cited:
- EP-A- 0 972 478
- EP-A2- 0 294 194
- GB-A- 717 024
- US-A- 2 592 992

## Description

### Technical field of invention

The present invention regards the field of recipients for baking or heating food.

For example, the invention can be used for cooking pastas, rice, cous cous, meat or fish dishes, etc.

### State-of-the art

Actually different types of recipients for baking, or heating of food products are known, such as that disclosed in EP 0294194 A2.

In particular, as far as microwaves ovens are concerned, the recipients comprise a rigid container, of plastic or glass material, open in the upper part, similar to a soup-plate of various forms (circular, oval etc.), provided with a lid having the breathing devices. The particular disadvantage of such recipients is given by the fact that said breathing devices to be activated by hand before using, realize a permanent communication between outside and inside of the recipient such, that the vapour pressure, produced inside the recipient itself in phase of product baking or heating, has not any influence in terms of reduction of time and efficiency of baking or heating.

Moreover, in case the user forgets to activate said breathing devices before the use, a high increasing of the pressure inside the pot can occur with consequent risks for personal safety and food product integrity, for the pot and baking/heating device.

Such type of pot is majorly used in microwaves ovens, but containers made of material which can be used, for example in traditional ovens, can be realized too.

So, the aim of the present invention is that to realize a pot of a simple structure and made preferably using cheep materials and production methods to use for baking or heating which permits a safe realization of adjustable breathing of inner vapours, also for making this cooking or heating more rapid and efficient.

Said aim can be achieved by means of a pot comprising a container open in the upper part and a sealing lid associated to it, characterized by the fact that said lid is partially constituted of elastic material, realized as a unique piece with the lid itself and a valve body, or fixed to them permanently or in a way to be substituted or removed, where said valve body includes a handle which allows to adjust the passages of breathing of inner vapours produced during the use of said pot. Moreover, such device comprises an element substained by the lid or by the container, realised in such a way that below a certain pressure value it closes the valve body, while, exceeding such value the valve body linked to the part of elastic material which lifts by effect of vapour pressure enhancing inside the pot separates it from said element, allowing the breathing of vapours outside.

Other characteristics and advantages of the invention will be clear from the following description of invention embodiments given as a non limitative example in figures 1, 2, 3, 4, 5, 6, 7, 8 and 9.

### Brief description of the figures

- Fig. 1: vertical section of the pot with lid applied and with vapour breathing device in rest position;
- Fig. 2: absonometrical view of only valve body with inserted adjusting handle;
- Fig. 3: upper view of complementary element in the valve body which constitutes the part of breathing device;
- Fig. 4: vertical section of the pot with lid, where the device of vapour breathing is in the open position;
- Fig. 5: section view of another embodiment of complementary element in the valve corp;
- Fig. 6: section view of an embodiment with vapour grill;
- Fig. 7: section view of an embodiment with the part of elastic material of substitutable lid;
- Fig. 8: section view of another embodiment of sealing coupling between lid and container;
- Fig. 9: absonometrical view of the device of figure 8.

### Detailed description of the figures

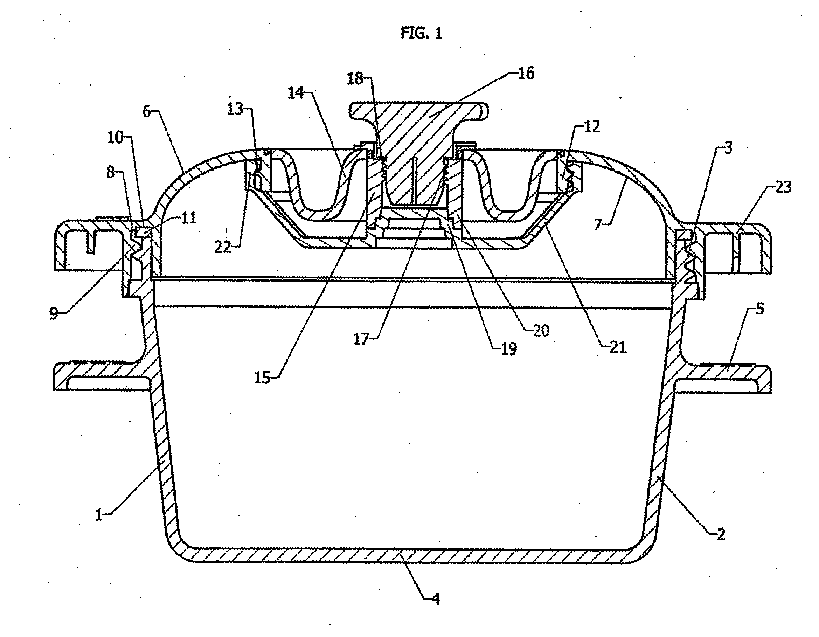

Figure 1 shows a container (1), for a product to be baked or heated, constituted by an external lateral wall (2), which terminates with a thread (3), and with a plain base surface (4).

Said container (1) provided with handles (5) acted to a more easy pot manipulation especially when it is hot, is associated to a lid (6), constituted by a wall (7) limited in the lower part by a double circular edge (8), provided with a thread (9), complementary to the thread (3) of the container (1), with which it is suitable to be coupled, and with a perimetral groove (10), suitable to receive a gasket(11).

As follows, in the lid the internal vapour breathing device is realized.

In central superior position said wall (7) presents a cylindrical element (12) provided with a thread (13), to which inner superior end a part of elastic material (14), opportunely shaped by simultaneous molding is fixed.

In the centre of said part of elastic material (14) the valve body (15) (for example, cylindrical) is, on its turn, fixed by means of, for example, techniques of simultaneous molding, which receives the regulation handle (16), provided with groove (17) complementary to the groove (18) present on the valve body (15).

In correspondence of the valve body (15), in the lower part of the lid (6), an element (19), opportunely shaped is placed. It is introduced in a complementary lower portion (20) of the valve body (15), closing its inferior opening.

Said element (19) is supported in the position mentioned before because it is provided with arms (21), which termins in a grooved wall (22) complementary to the groove (13) to which it is hooked stably.

The lid (6) is, moreover, perimetrally provided with horns (23), suitable to facilitate to the user the opening and closure of the same lid.

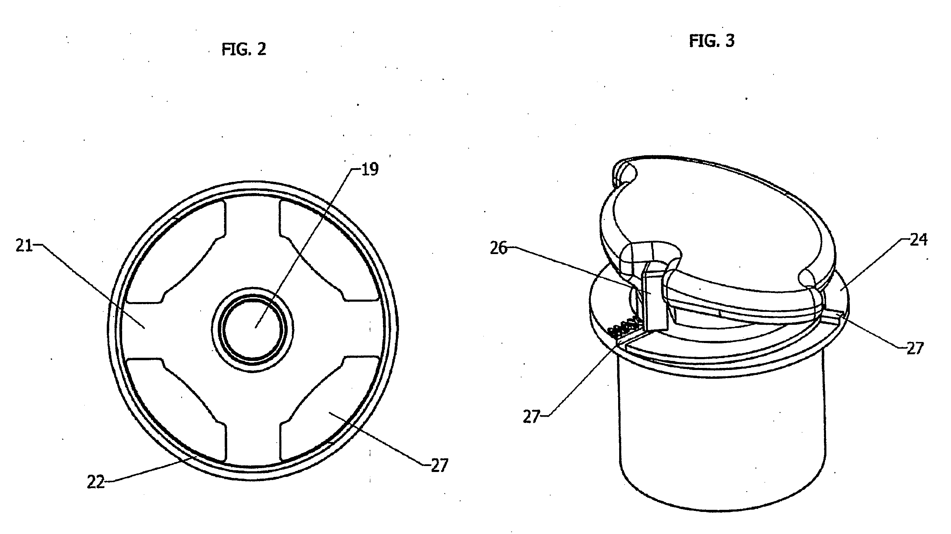

In figure 2 it is possibile to observe the top of the valve body, realizable with a flange (24) on which it is possibile to indicate the extreme and intermediate positions of regulation, with eventual related block guides (25) for the element (26) of the handle (16).

Said element (26) of the regulation handle (16) is structured in a way to interfere with valve body, in order to make possible to realize during the usage, in the position of maximum inner pressure, the flow of vapour between inside and outside of the pot, anyway sufficient to guarantee safety conditions.

Figure 3 shows an upper view of the element (19) and related supporting arms (21) which define with the grooved wall (22), the openings (27) of communication between the container (1) and the valve body.

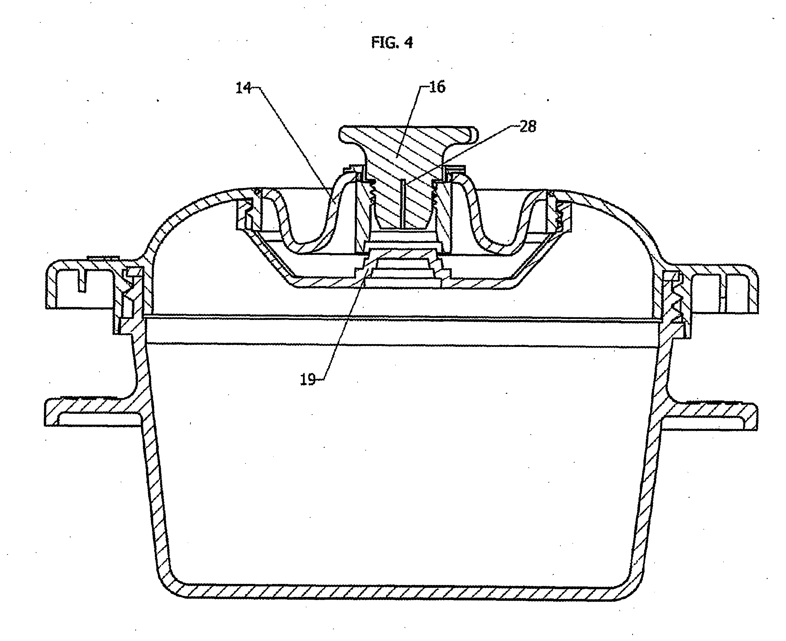

In figure 4 the pot in the usage phase is shown. Precisely, the moment in which the inner pressure is such to determine the lifting of the part of elastic material (14) which pulls in its movement the valve body fixed to it is shown.

It follows that the lower part of the valve body mentioned before separates from the complementary element (19), realizing a communication between inside and outside of the pot by means of the passagge (28) of the handle (16).

The vapour present in the pot will be able so to flow outside, tending to balance the opposite pressures, but continuing to maintain inside the pot the maximum pressure realizable in base of the regulation realized by the user, with consequent optimisation of time and results.

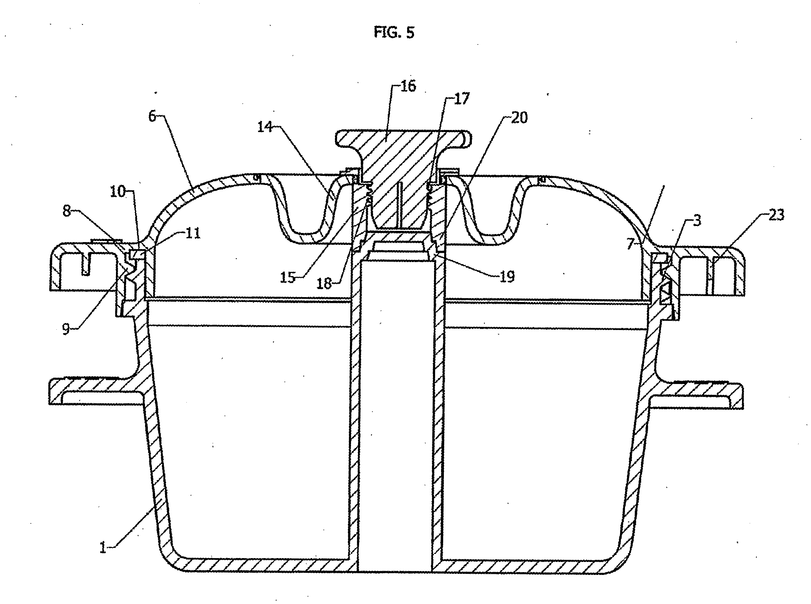

Figure 5 shows a possible embodiment in which the element (19) is fixed to the container (1).

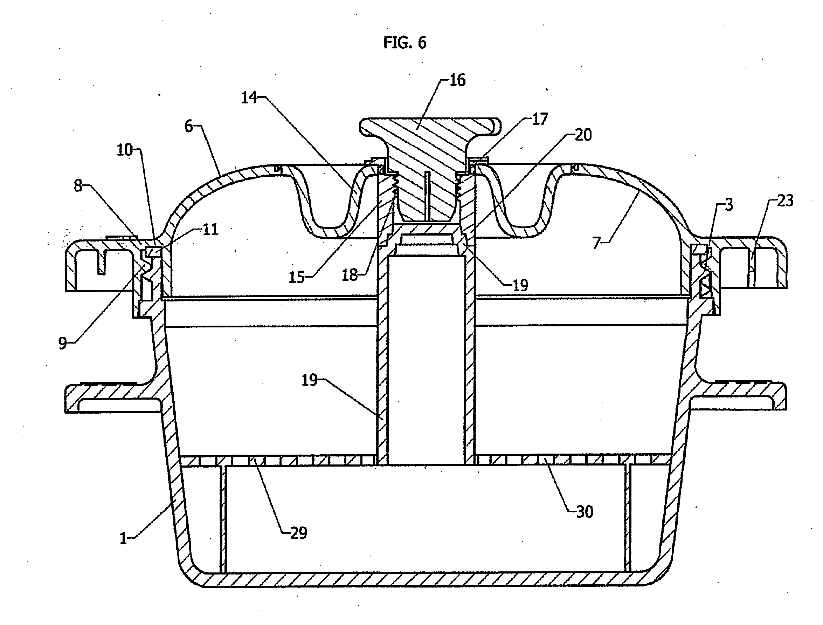

Figure 6 shows an embodiment in which container (1) is provided with a grill (29), provided with holes (30), usable to separate the food products from liquids, for example, for vapour cooking which comprises also the element (19).

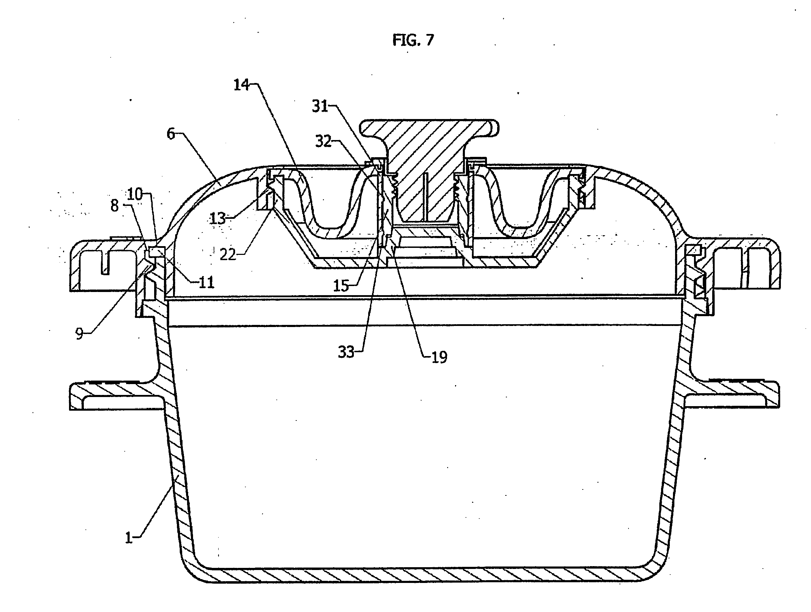

In figure 7 an embodiment of the breathing device in which the part of elastic material (14) is not stably fixed to the lid and to the valve body is described. In fact, it can be removed or, if necessary, substituted, removing both the element (19) from the lid, and the element (31) fixed to the valve body by means of, for example, the complementary interferences (32) and (33).

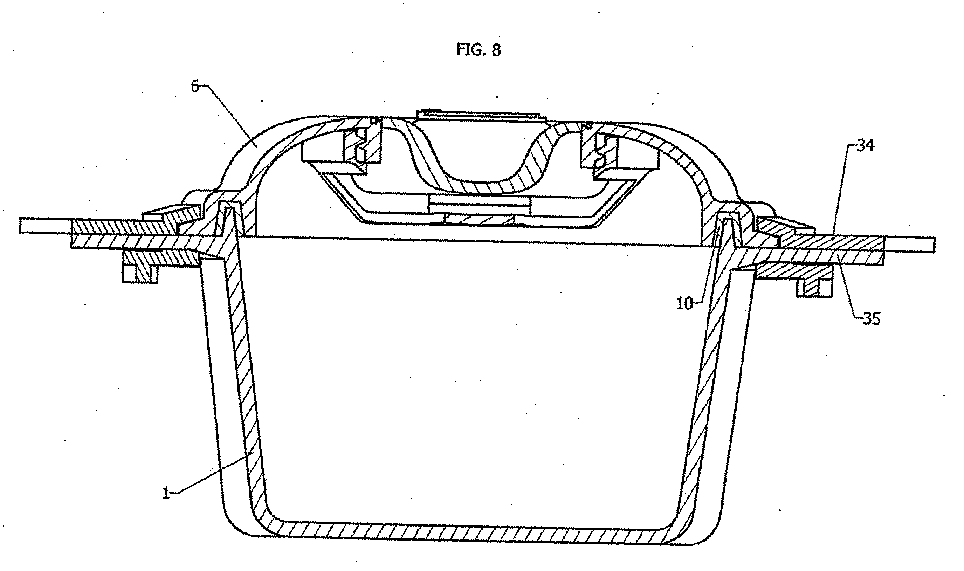

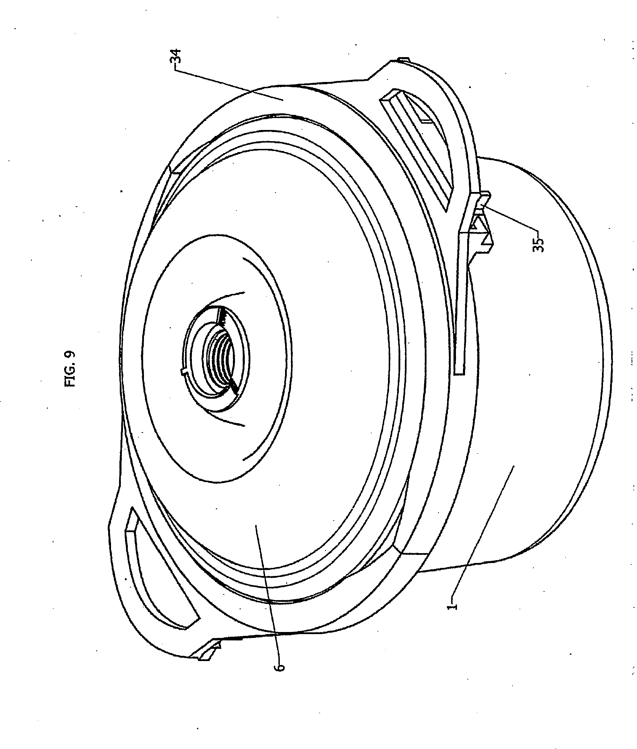

Figures 8 and 9 show a particular coupling device between the lid (6) and the container (1). Such device is constituted by blocking elements (34) sliding along the guides (35) present, in this specific case, in the container (1), in order they can be supported also by the lid (6).

In condition of maximum contact with the edges of the lid (6) and of the container (1), shaped for this specific aim, said blocking elements (34) allow to couple a lid and the container sealing them.

The invention, certainly, is not limited, to the representation of the figures, but can receive perfections and modifications from men skilled in the art, without going out of the scope of the patent as defined by the appended claims.

Present invention permits numerous advantages and, particularly, allows to overcome the difficulties that could not be surmounted using the systems that are actually in commerce.

## Claims

1. Baking or heating pot for food products, comprising a container (1), open in the upper part and a sealing lid (6) associated to it, **characterized by** the fact that said lid is partially constituted of elastic material (14), that said part is realised as a unique piece with the lid (6) and a valve body (15), or fixed to them permanently or in a way to be substituted or removed, that said valve body (15) includes a handle (16) which allows to adjust one or more than one passages (28), which realize a communication of said container (1) with external environment for inner vapours breathing and below a certain pressure value said valve body (15) is closed by a complementary element (19), substained by the same lid (6) or by the container (1), while, exceeding such value the elastic portion (14), lifts by effect of vapour pressure increasing inside the container (1), the valve corp is separated from said complementary element (19), allowing the breathing of vapours outside.

2. Baking or heating pot for food products, according to the claim 1, **characterized by** the fact that said container (1) is constituted by an external lateral wall (2), which terminates with a thread (3).

3. Baking or heating pot for food products, according to the claim 2, **characterized by** the fact that said lid (6) is constituted by a wall (7) limited in the lower part by a double circular edge (8), provided with a thread (9), complementary to the thread (3) of the container (1) with which it is suitable to be coupled, and with a perimetral groove (10), suitable to receive a gasket (11).

4. Baking or heating pot for food products, according to one of the previous claims, **characterized by** the fact that said lid (6) is perimetrally provided with horns (23), acted to facilitate to the user the opening and closure of the same lid.

5. Baking or heating pot for food products, according to the claim 1, **characterized by** the fact that said lid (6) is provided with guides (35) on which blocking elements (34) can run and in condition of maximum contact with the edges of the lid and of the container, allow to couple a lid and the container sealing them.

6. Baking or heating pot for food products, according to one of the previous claims, **characterized by** the fact that said valve body (15) is cylindrical and it is provided with a groove (18) and that said handle (16) is provided with groove (17) complementary to the groove (18) present on the valve body (15).

7. Baking or heating pot for food products, according to one of the previous claims, **characterized by** the fact that said element (19) is provided with arms (21), which terminate in a grooved wall (22) complementary to the groove (13), realized at the end of the wall (7) of the lid (6) to which said element (19) is hooked stably.

8. Baking or heating pot for food products, according to one of the previous claims, **characterized by** the fact that said container (1) is provided with a grill (29), provided with holes (30) usable to separate the food products from liquids, for example, for vapour cooking which comprises also the element (19).

9. Baking or heating pot for food products, according to one of the previous claims, **characterized by** the fact that said part of elastic material (14) can be removed or, if necessary, substituted removing both the element (19) from the lid, and the element (31) fixed to the valve body by means of, for example, the complementary interferences (32) and (33).

## Patentansprüche

1. Topf zum Kochen oder Erhitzen von Nahrungsmitteln, umfassend einen oben offenen Behälter (1) mit einem abdichtenden Deckel (6), **dadurch gekennzeichnet, dass** der Deckel teilweise aus elastischem Material (14) besteht, wobei dieser Teil einstückig mit dem Deckel (6) und einem Ventilkörper (15) ausgebildet oder ständig oder austauschbar oder abnehmbar daran befestigt ist, dass der Ventilkörper (15) einen Griff (16) zum Einstellen von einer oder mehr als einer Durchtrittsöffnung (28) hat, die eine Verbindung des Behälters (1) mit der Umgebung für eine Entlüftung des inneren Dampfdrucks ermöglicht, wobei bis zu einem bestimmten Druck der Ventilkörper (15) durch ein Komplementärelement (19) geschlossen ist, das am Deckel (6) oder am Behälter (1) angebracht ist, während bei Überschreiten des bestimmten Drucks der elastische Teil (14) durch den ansteigenden Dampfdruck im Behälter (1) angehoben und **dadurch** der Ventilkörper (15) von dem Komplementärelement (19) abgehoben wird, so dass der Dampf nach außen entweichen kann.

2. Topf zum Kochen oder Erhitzen von Nahrungsmitteln nach Anspruch 1, **dadurch gekennzeichnet, dass** der Behälter (1) eine äußere Seitenwand (2) hat, die mit einem Gewinde (3) abschließt.

3. Topf zum Kochen oder Erhitzen von Nahrungsmitteln nach Anspruch 2, **dadurch gekennzeichnet, dass** der Deckel (6) aus einer Wand (7) besteht, die nach unten von einer doppelten Ringkante (8) begrenzt wird, welche ein Gewinde (9) hat, das dem Gewinde (3) des Behälters (1) entspricht, der durch den Deckel verschließbar ist, wobei die Ringkante (8) eine umlaufende Nut (10) zur Aufnahme einer Dichtung (11) aufweist.

4. Topf zum Kochen oder Erhitzen von Nahrungsmitteln nach einem der vorhergehenden Ansprüche, **dadurch gekennzeichnet, dass** an dem Deckel (6) umlaufende Vorsprünge (23) ausgebildet sind, die dem Benutzer das Öffnen und Schließen des Deckels erleichtern.

5. Topf zum Kochen oder Erhitzen von Nahrungsmitteln nach Anspruch 1, **dadurch** gekenntzeichnet, dass der Deckel (6) Führungen (35) hat, an denen Verriegelungselemente (34) verschiebbar sind, die bei maximalem Kontakt mit den Rändern des Deckels und des Behälters eine druckdichte Verriegelung des Deckels und des Behälters gewährleisten.

6. Topf zum Kochen oder Erhitzen von Nahrungsmitteln nach einem der vorhergehenden Ansprüche, **dadurch gekennzeichnet, dass** der Ventilkörper (15) zylindrisch ist und eine Nut (18) hat und dass der Einstellgriff (16) eine Komplettaentärnut (17) hat, die der Nut (18) am Ventilkörper (15) entspricht.

7. Topf zum Kochen oder Erhitzen von Nahrungsmitteln nach einem der vorhergehenden Ansprüche, **dadurch gekennzeichnet, dass** das Kotxaplementärelement (19) mit Armen (21) versehen ist, die in einer genuteten Wand (22) enden, welche der Nut (13) am Ende der Wand (7) des Deckels (6) entspricht, mit dem das Element (19) fest in Eingriff ist.

8. Topf zum Kochen oder Erhitzen von Nahrungsmitteln nach einem der vorhergehenden Ansprüche, **dadurch gekennzeichnet, dass** der Behälter (1) einen Gittereinsatz (29) mit Öffnungen (30) hat, um die Nahrungsmittel von Flüssigkeiten zu trennen, beispielsweise beim Kochen mit Dampfdruck, wobei das Gitter (29) auch das Komplementärelement (19) aufweist.

9. Topf zum Kochen oder Erhitzen von Nahrungsmitteln nach einem der vorhergehenden Ansprüche, **dadurch gekennzeichnet, dass** der elastische Teil (14) abnehmbar und bei Bedarf austauschbar ist, wozu sowohl das Komplementärelement (19) von dem Deckel als auch ein Element (31), das mit dem Ventilkörper (15) durch ICanteneingriffselemente (32) und (33) verbunden ist, abgenommen werden.

## Revendications

1. Récipient de cuisson ou de chauffage pour produits alimentaires, comprenant une cuve (1) dont la partie supérieure est ouverte et un couvercle étanche (6) qui lui est associé, **caractérisé par le fait que** ledit couvercle est partiellement constitué d'un matériau élastique (14), que ladite partie est composée d'une pièce unique avec le couvercle (6) et un corps de soupape (15), ou fixée à ces derniers de manière permanente ou d'une manière permettant son remplacement ou son retrait, que ledit corps de soupape (15) comporte une poignée (16) qui permet d'ajuster un ou plusieurs passages (28), ce qui permet de mettre en communication ladite cuve (1) et l'environnement externe pour expulser les vapeurs internes, et en dessous d'une certaine valeur de pression ledit corps de soupape (15) est fermé par un organe complémentaire (19) maintenu par le même couvercle (6) ou par la cuve (1), tandis que quand cette valeur est dépassée la partie élastique (14) se soulève sous l'effet de la pression de la vapeur augmentant à l'intérieur de la cuve (1), le corps de soupape se séparant dudit organe complémentaire (19) pour permettre l'expulsion des vapeurs vers l'extérieur.

2. Récipient de cuisson ou de chauffage pour produits alimentaires selon la revendication 1, **caractérisé par le fait que** ladite cuve (1) est constituée d'une paroi latérale externe (2) se terminant par un filetage (3).

3. Récipient de cuisson ou de chauffage pour produits alimentaires selon la revendication 2, **caractérisé par le fait que** ledit couvercle (6) est constitué d'une paroi (7) limitée sur sa partie inférieure par un double bord circulaire (8), pourvu d'un filetage (9) complémentaire au filetage (3) de la cuve (1) avec lequel il s'accouple de manière appropriée et d'une rainure périphérique (10) appropriée pour recevoir un joint statique (11 ).

4. Récipient de cuisson ou de chauffage pour produits alimentaires selon l'une quelconque des revendications précédentes, **caractérisé par le fait que** ledit couvercle (6) présente des cornes (23) sur sa périphérie dont la fonction est de faciliter l'ouverture et la fermeture du même couvercle par l'utilisateur.

5. Récipient de cuisson ou de chauffage pour produits alimentaires selon la revendication 1, **caractérisé par le fait que** ledit couvercle (6) est pourvu de guides (35) sur lesquels des organes de blocage (34) peuvent se placer et qui permettent l'accouplement étanche d'un couvercle et de la cuve quand les bords du couvercle et ceux de la cuve sont en contact maximum.

6. Récipient de cuisson ou de chauffage pour produits alimentaires selon l'une quelconque des revendications précédentes, **caractérisé par le fait que** ledit corps de soupape (15) est cylindrique et pourvu d'une rainure (18), et que ladite poignée (16) est pourvue d'une rainure (17) complémentaire à la rainure (18) présente sur le corps de soupape (15).

7. Récipient de cuisson ou de chauffage pour produits alimentaires selon l'une quelconque des revendications précédentes, **caractérisé par le fait que** ledit organe (19) est pourvu de bras (21) qui se terminent dans une paroi rainurée (22) complémentaire à la rainure (13) formée à l'extrémité de la paroi (7) du couvercle (6) auquel ledit organe (19) est accroché de manière stable.

8. Récipient de cuisson ou de chauffage pour produits alimentaires selon l'une quelconque des revendications précédentes, **caractérisé par le fait que** ladite cuve (1) est pourvue d'une grille (29) percée par des trous (30) utilisable pour séparer les produits alimentaires des liquides, par exemple pour une cuisson à la vapeur qui comprend également l'organe (19).

9. Récipient de cuisson ou de chauffage pour produits alimentaires selon l'une quelconque des revendications précédentes, **caractérisé par le fait que** ladite partie de matériau élastique (14) peut être retirée ou, si nécessaire, remplacée en retirant à la fois l'organe (19) du couvercle et l'organe (31) fixé au corps de soupape au moyen, par exemple, des interférences complémentaires (32) et (33).
